# EUROPÄISCHE PATENTSCHRIFT

(11) **EP 0 538 666 B1**
(45) Veröffentlichungstag und Bekanntmachung des Hinweises auf die Patenterteilung: **25.01.1995**
(21) Anmeldenummer: 92116972.8
(22) Anmeldetag: 05.10.1992
(51) Int. Cl.: B62D 1/20, B62D 1/16, F16D 1/08, F16B 21/16

(54) **Verbindung zwischen einer Lenkwelle und dem Lenkgetriebe in einem Kraftfahrzeug**
Connection between a steering column and the steering gear in an automotive vehicle
Liaison entre une colonne de direction et le boîtier de direction dans un véhicule automobile

(30) Priorität: 22.10.1991 DE 4134802
(43) Veröffentlichungstag der Anmeldung: 28.04.1993
(73) Patentinhaber: LEMFOERDER METALLWAREN AG., D-49441 Lemförde (DE)
(72) Erfinder: Ersoy, Metin, Dr.-Ing., W-6229 Walluf 2 (DE)
(74) Vertreter: Bruse, Willy Hans Heinrich

(56) Entgegenhaltungen:
- DE-A- 3 839 325
- GB-A- 2 124 739
- US-A- 5 010 783

## Beschreibung

Die Erfindung bezieht sich auf die Ausbildung der Verbindung zwischen einer Lenkwelle und dem Lenkgetriebe in einem Kraftfahrzeug mit Gattungsmerkmalen nach dem Oberbegriff des Patentanspruches 1.

Eine solche ist in einer demontierbaren Ausbildung aus der GB-2 124 739 A bekannt. Das stiftförmige Sicherungsglied ist an einem Federbügel ausgebildet, so daß der Stift unter elastischer Verformung des Federbügels herausgezogen werden kann, um beide Wellenteile voneinander zu trennen. Eine solche Verbindung muß einerseits lösbar sein, aber andererseits Montagefehler, vor allem Abweichungen von einer vorbestimmten Winkellage der Lenkwelle zum Lenkgetriebe, ausschließen sowie eine spielfreie Drehmomentübertragung gewährleisten. Bekannt ist die Anordnung der Nabe am unteren Ende der Lenkwelle oder an einem Wellenstumpf am Lenkgetriebe, auf den die Nabe bei der Montage aufgeschoben und gesichert wird. Dazu weisen der Wellenstumpf und die Nabe ein zur Drehmomentübertragung geeignetes Querschnittsprofil auf, zum Beispiel eine Keilverzahnung am Umfang, ein Flachprofil oder ein Polygonprofil. Zur axialen Sicherung dieser Verbindung dient ein in eine Querbohrung der Nabe einsteckbarer Schraubenbolzen, dessen Schaft mit einem Teilbereich seines Umfanges in eine auf seinen Durchmesser und sein Profil abgestimmte Quernut am Umfang des Wellenstumpfes eingreift, so daß der Schraubenbolzen nur in einer vorbestimmten Lage von Nabe und Wellenstumpf zueinander durch die Querbohrung der Nabe steckbar ist und durch eine Gewindemutter festgelegt werden kann. Anstelle dieser allgemein üblichen Sicherung kann auch eine Verbindung nach der GB-2 124 739 A eingesetzt werden. Eine solche Verbindung ist lösbar. Die Herstellung der Verbindung erfordert mehrere Arbeitsgänge, wobei eine exakte, das Einsetzen des Schraubenbolzens ermöglichende Einstecktiefe bei der Montage nicht vorgegeben werden kann, so daß vor allem dadurch die maschinelle Montage unmöglich oder wenigstens doch erheblich erschwert wird.

Der Erfindung liegt daher die Aufgabe zugrunde, eine Verbindung zwischen einer Lenkwelle und dem Lenkgetriebe eines Kraftfahrzeugs zu schaffen, die unter Beibehaltung der unverzichtbaren Voraussetzungen einer spielfreien Drehmomentübertragung, einer fehlerfreien Montage mit Sichtkontrolle und Demontierbarkeit zu einer Montageerleichterung führt und die maschinelle Montage begünstigt.

Dies erreicht die Erfindung durch eine Ausbildung der Verbindung nach dem Oberbegriff mit Merkmalen nach dem Kennzeichen des Patentanspruches 1.

Dadurch wird vor allem erreicht, daß die Verbindung beim Aufschieben der Nabe auf den Wellenstumpf bzw. beim Einschieben des Wellenstumpfes in der vorgegebenen Montageposition selbsttätig einrastet und dann gegen axiale Verschiebung der beiden Elemente zueinander gesichert ist. Die Erfindungsmerkmale ermöglichen somit ein fehlerfreies Zusammenfügen der Nabe und des Wellenstumpfes. Erhalten bleibt eine spielfreie Drehmomentübertragung und die Möglichkeit der Sichtkontrolle für das richtige Zusammenfügen der Nabe und des Wellenstumpfes. Eine entsprechende Ausbildung des als Sicherungselement wirksamen Stiftes ermöglicht das Lösen der Verbindung. Für die Montage und für die Demontage wird ein Werkzeug nicht benötigt.

Durch die Lage des Sackloches in der Nabe unter einem Winkel von vorzugsweise 45° zur Längsachse der Nabe, welcher zum Ende des eingesteckten Wellenstumpfes hin offen ist, wird das Einschieben des Wellenstumpfes in die Nabe erleichtert. Vorteilhaft ist die Anordnung zweier Stifte in je einem Sackloch der Nabe um 180° versetzt zueinander. Das Sackloch kann von innen oder als Durchgangsbohrung mit einem Verschlußstopfen auf der Außenseite ausgebildet ist.

Der Stift ragt vorteilhaft auf beiden Seiten aus der Nabe heraus, so daß seine Enden zwischen den Fingern einer Hand erfaßbar sind, wodurch das Zurückziehen des Stiftes gegen die Federwirkung ermöglicht wird.

Nach einer weiteren Ausgestaltung des Erfindungsgedankens ist vorgesehen, daß im Endbereich des in die Nabe einfassenden Wellenstumpfes eine Keilfläche ausgebildet und in der Nabe achsparallel zu dem ersteren Stift ein weiterer, mit dieser Keilfläche zusammenwirkender, gegen den Wellenstumpf abgefederter Stift angeordnet ist, wobei die Abfederung dieses Stiftes stark progressiv Federkräfte aufbaut, wenn der Stift gegen die Feder zurückgedrückt wird. Dies bewirkt eine Verklemmung des Stumpfes in der Nabe und sorgt auch bei groben Fertigungstoleranzen für eine spielfreie Verbindung sowohl in axialer Richtung als auch in Drehrichtung. Bevorzugt wird eine Ausbildung, bei der der an der Keilfläche wirksame Stift exzentrisch in einer im Durchmesser größeren Ausnehmung der Nabe angeordnet und darin in einem elastischen Werkstoff eingebettet ist.

Eine bevorzugte Ausbildung der Erfindung sieht vor, daß die Nabe einen Außenmantel aus elastischem Werkstoff aufweist und mit diesem konzentrisch in einem mit dem Lenkgetriebe bzw. der Lenkwelle verbundenen Rohrgehäuse angeordnet ist. Dadurch wird die Weiterleitung von Schwingungen vom Lenkgetriebe zur Lenkwelle und damit zum Lenkrad vermieden. Daraus leitet sich eine bevorzugte Variante ab, bei der zwischen dem die Nabe ummantelnden elastischen Werkstoff und dem Rohrgehäuse das Muffenende der Gelenkgabel eines Kreuzgelenkes festhaftend angeordnet ist. Auf diese Weise kann eine Schwingungen absorbierende kurze Baulänge erreicht werden. Die Gelenkgabel kann aus zwei symmetrischen Teilen bestehen, die durch das Rohrgehäuse zu einer starren Gelenkgabel zusammengehalten werden.

Ausführungsbeispiele der Erfindung sind auf der Zeichnung dargestellt. Es zeigen:
- Figur 1: ein erstes Ausführungsbeispiel im Längsschnitt,
- Figur 2: einen Querschnitt nach der Linie II - II,
- Figur 3: ein zweites Ausführungsbeispiel, bei dem eine ummantelte Nabe in einem Rohrgehäuse angeordnet ist,
- Figur 4: einen Schnitt nach der Linie IV - IV der Figur 3,
- Figur 5: ein drittes Ausführungsbeispiel mit einem Rohrgehäuse aus Blech,
- Figur 6: einen Schnitt nach der Linie VI - VI der Figur 5,
- Figur 7: eine Ansicht nach der Linie VII - VII der Figur 5 und
- Figur 8: eine gegenüber Fig.5 um 90° versetzte Darstellung teilweise in Seitenansicht und teilweise im Schnitt.

Die Verbindung zwischen der Lenkwelle und dem Lenkgetriebe eines Kraftfahrzeuges besteht aus einem Wellenstumpf 1, welcher vorzugsweise am Ausgang des Lenkgetriebes angeordnet ist, und der Nabe 2, die vorzugsweise am unteren Ende der Lenkwelle befestigt ist. Zur Drehmomentübertragung greifen der Wellenstumpf 1 und die Nabe 2 mit einem komplementären Profil ineinander, zum Beispiel mit einer Keilverzahnung, einem Zweiflachprofil oder einem Polygonprofil, wie es an sich bekannt ist. Zur Sicherung der Axiallage des Wellenstumpfes 1 in der Nabe 2 sind an zwei sich diametral zur Achse 3 gegenüberliegenden Stellen je ein Stift 4 in einem länglichen Sackloch 5 der Nabe 2 angeordnet. Das Sackloch erstreckt sich mit der Längsrichtung seines Querschnittes schräg zur Längsachse 3 und schließt mit dieser einen zum Ende des Wellenstumpfes 1 offenen Winkel ein. Der Stift 4 greift mit einem Teilbereich seines Umfanges in eine querverlaufende Ausnehmung 6 am Umfang des Wellenstumpfes 1 ein. In Richtung gegen den Wellenstumpf 1 ist der Stift 4 durch eine Schraubenfeder 7 belastet, die in dem Sackloch angeordnet ist. Anstelle des auf der Zeichnung dargestellten runden Querschnitts des Stiftes 4 sind polygonale Querschnitte ebenso geeignet. Im Endbereich des in die Nabe 2 einfassenden Wellenstumpfes 1 ist eine Keilfläche 8 am Wellenstumpf 1 ausgebildet, die mit einem weiteren Stift 9 zusammenwirkt, der achsparallel zu dem Stift 4 in einer Bohrung 10 der Nabe 2 angeordnet ist. Diese Bohrung 10 weist einen größeren Durchmesser als der Stift 9 auf. In der Bohrung 10 ist der Stift 9 exzentrisch angeordnet und durch eine Gummifeder 11 vorgespannt, um ein elastisches Nachgeben des Stiftes beim Einschieben des Wellenstumpfes 1 in die Nabe 2 zu erreichen. Durch die Keilfläche 8 werden selbst grobe Fertigungstoleranzen kompensiert und erfolgt eine spielfreie Verbindung zwischen dem Wellenstumpf 1 und der Nabe 2. Dabei dient der Stift gleichzeitig als Endanschlag und verhindert ein ungewolltes Durchschieben des Wellenstumpfes 1 durch die Nabe 2. Zur Erleichterung der Montage ist der Wellenstumpf 1 am Ende mit einer Phase versehen, so daß die dadurch erreichte Keilwirkung den Stift 4 beim Einführen des Wellenstumpfes 1 in die Nabe 2 gegen die Wirkung der Schraubenfeder 7 zurückdrückt. In der vorbestimmten Montagelage rastet der Stift 4 in die Quernut 6 ein und der Stift 9 preßt den Wellenstumpf 1 gegen die dem Stift gegenüberliegende Nabenseite und bewirkt eine spielfreie Verbindung. Zur Erleichterung der Montage ist das Sackloch 5 für den Stift 4 mit der Längsrichtung seines Querschnitts unter einem gegen die Einschubrichtung des Wellenstumpfes 1 offenen Winkel von etwa 45° angeordnet.

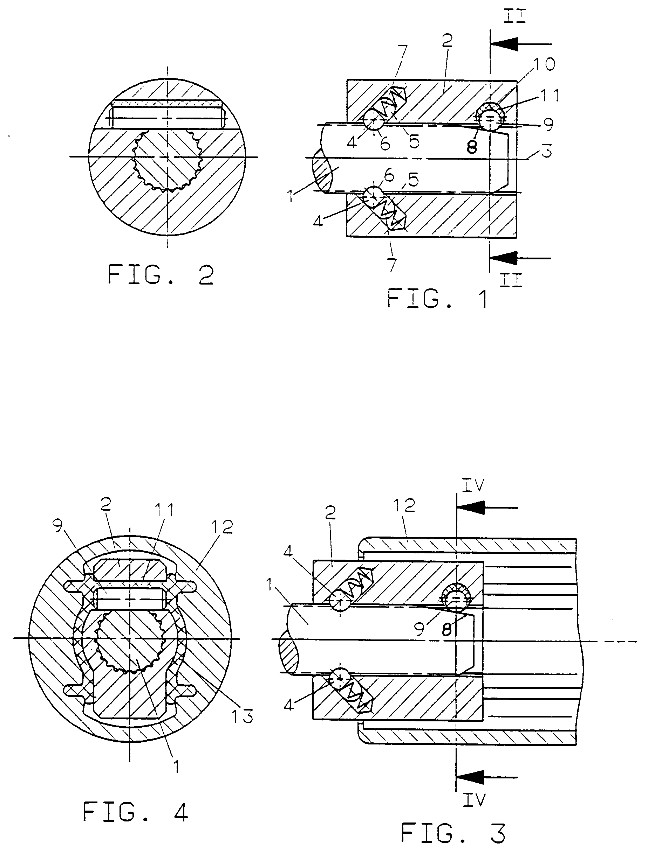

Bei dem im wesentlichen mit der Beschreibung zu den Ausführungsbeispielen in den Figuren 1 und 2 übereinstimmenden Ausführungsbeispiel nach den Figuren 3 und 4 ist die Nabe 2 in einem Rohrgehäuse 12 angeordnet und außerdem wenigstens teilweise mit einem Mantel 13 aus elastischem Werkstoff versehen, der sich zwischen der Nabe 2 und dem Rohrgehäuse 12 erstreckt. Dieser elastische Werkstoff des Mantels 13 kann einstückig mit der Gummifeder 11 bei der Montage eingespritzt werden, wie es die Zeichnung in Figur 4 zeigt.

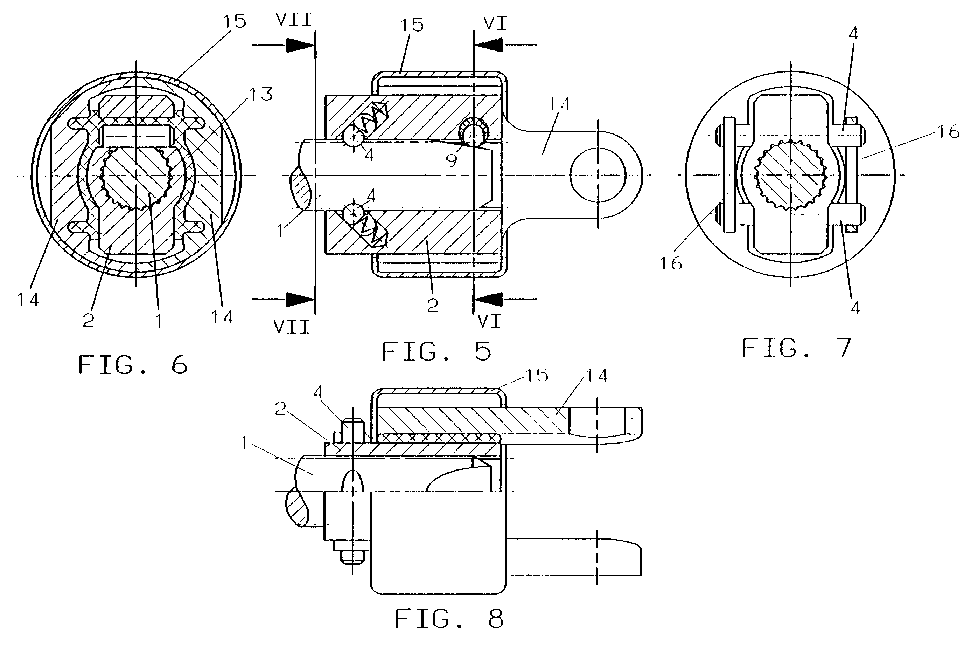

In der Figur 5 ist der Anschluß der Nabe 2 an ein Gabelstück 14 eines Kreuzgelenkes oder dergleichen beispielsweise dargestellt. Das Gabelstück dieses Kreuzgelenkes umschließt mit seinem Muffenende die Nabe 2. Der Mantel 13 aus elastischem Werkstoff ist zwischen diesem Muffenteil und der Nabe 2 angeordnet, wie es aus der Figur 6 ersichtlich ist. Das Gabelstück 14 des Kreuzgelenkes kann, wie besonders aus Fig. 8 ersichtlich, aus zwei identischen Hälften bestehen, die in spiegelbildlich versetzter Lage zueinander positioniert sind und durch einen Blechring 15 zusammengehalten werden.

Bei einer bevorzugten Ausführungsform nach den Figuren 7 und 8 ragen die paarweise angeordneten Stifte 4 mit ihren Enden beiderseits aus der Nabe 2 heraus, so daß sie mit der Hand zwischen den Fingern erfaßbar und gegen die Wirkung der Schraubenfeder 7 zurückziehbar sind, um den Stiften 4 für das Herausziehen des Wellenstumpfes 1 aus der Nabe 2 das Zurückweichen im Sackloch 5 zu ermöglichen. Die Enden der paarweise angeordneten Stifte 4 werden durch eine Klammer 16 zusammengehalten, die verhindert, daß die Stifte unter ungünstigsten Betriebsbedingungen gegen die Wirkung der Schraubenfeder 7 zurückweichen können, wodurch der Wellenstumpf 1 aus seiner Halterung in der Nabe 2 freigegeben würde.

### BEZUGSZEICHENLISTE:

- 1: Wellenstumpf
- 2: Nabe
- 3: Längsachse
- 4: Stift
- 5: Sackloch
- 6: Quernut
- 7: Schraubenfeder
- 8: Keilfläche
- 9: Stift
- 10: Bohrung
- 11: Gummifeder
- 12: Rohrgehäuse
- 13: Mantel
- 14: Gabelstück
- 15: Blechring
- 16: Klammer

## Patentansprüche

1. Verbindung zwischen einer Lenkwelle und dem Lenkgetriebe in einem Kraftfahrzeug, bestehend aus einer Nabe (2) des einen Teils und einem Wellenstumpf (1) des anderen Teils, die beide mit einem drehfesten Querschnittsprofil ineinanderfassen und durch wenigstens ein in einer Ausnehmung (5) der Nabe (2) unter einem Winkel von etwa 90° zur Achse der Nabe angeordnetes und mit einem Teilbereich seines Umfanges in eine Quernut (6) des Wellenstumpfes (1) in Drehrichtung formschlüssig eingreifendes Sicherungselement (4) aus einem quer zur Längsachse (3) der Lenkwelle angeordneten Stift gegen axiale Verschiebung gesichert ist, dadurch gekennzeichnet, daß der Stift (4) in einem zur Nabenmitte offenen Sackloch (5) der Nabe (2), dessen Längsachse mit der Längsachse (3) der Nabe einen zum Ende des Wellenstumpfes (1) offenen Winkel von 45° einschließt, angeordnet und durch eine in dem Sackloch (5) angeordnete Feder (7) gegen den Wellenstumpf (1) belastet ist.

2. Verbindung nach Anspruch 1, dadurch gekennzeichnet, daß zwei Stifte (4) je in einem Sackloch (5) der Nabe (2) um 180° versetzt zueinander angeordnet sind.

3. Verbindung nach den Ansprüchen 1 und 2, dadurch gekennzeichnet, daß in Umfangsrichtung zueinander versetzt angeordnete Stifte durch eine lösbare Klammer (16) gegen eine Radialbewegung gesichert sind.

4. Verbindung nach den Ansprüchen 1 bis 3, dadurch gekennzeichnet, daß im Endbereich des in die Nabe (2) einfassenden Wellenstumpfes (1) eine Keilfläche (8) ausgebildet und in der Nabe achsparallel zu dem ersteren Stift (4) ein weiterer mit dieser Keilfläche zusammenwirkender, gegen den Wellenstumpf (1) abgefederter Stift (9) angeordnet ist, wobei die Federkräfte sich in Gegenrichtung progressiv aufbauen.

5. Verbindung nach Anspruch 4, dadurch gekennzeichnet, daß der an der Keilfläche (8) wirksame Stift (9) exzentrisch in einer im Durchmesser größeren Ausnehmung (10) der Nabe (2) angeordnet und darin in einem elastischen Werkstoff (Gummifeder 11) eingebettet ist.

6. Verbindung nach den Ansprüchen 1 bis 5, dadurch gekennzeichnet, daß die Nabe (2) einen Außenmantel aus elastischem Werkstoff aufweist und mit diesem konzentrisch in einem mit dem Lenkgetriebe bzw. der Lenkwelle verbundenen Rohrgehäuse (12) angeordnet ist.

7. Verbindung nach Anspruch 6, dadurch gekennzeichnet, daß zwischen dem die Nabe (2) ummantelnden elastischen Werkstoff und dem Rohrgehäuse (12) das Muffenende der Gelenkgabel (14) eines Kreuzgelenks festhaftend angeordnet ist.

8. Verbindung nach Anspruch 7, dadurch gekennzeichnet, daß die Gelenkgabel aus zwei symmetrischen Teilen besteht, die ein beide umgebender Blechring (15) zusammenhält.

## Claims

1. Connection between a steering shaft and the steering gear in a motor vehicle, consisting of a boss (2) of one part and a shaft stub (1) of the other part, the two interlocking with a non-rotatable cross-sectional profile, and the connection being secured against axial displacement by at least one retaining element (4), which is arranged in a recess (5) in the boss (2) at an angle of approximately 90° to the axis of the boss and engages positively with a portion of its circumference in a transverse groove (6) in the shaft stub (1) in the direction of rotation, which element consists of a pin which is arranged transversely to the longitudinal axis (3) of the steering shaft, characterised in that the pin (4) is arranged in a blind hole (5) in the boss (2), which hole is open towards the boss centre and the longitudinal axis of which forms with the longitudinal axis (3) of the boss an angle of 45° which is open towards the end of the shaft stub (1), and the pin is loaded towards the shaft stub (1) by a spring (7) arranged in the blind hole (5).

2. Connection according to claim 1, characterised in that two pins (4) are in each case arranged in a blind hole (5) in the boss (2) such that they are staggered by 180°.

3. Connection according to claims 1 and 2, characterised in that pins which are staggered in the circumferential direction are secured against a radial movement by a releasable clip (16).

4. Connection according to claims 1 to 3, characterised in that a wedge surface (8) is formed in the end area of the shaft stub (1) engaging in the boss (2), and a further pin (9), which co-operates with this wedge surface and is spring-loaded towards the shaft stub (1), is arranged in the boss paraxially with the first pin (4), the spring forces building up progressively in the opposite direction.

5. Connection according to claim 4, characterised in that the pin (9), which acts on the wedge surface (8), is arranged eccentrically in a recess (10), which is of a greater diameter, in the boss (2) and is embedded in this recess in an elastic material (rubber spring 11).

6. Connection according to claims 1 to 5, characterised in that the boss (2) has an outer shell of an elastic material and is arranged concentrically with this in a tubular housing (12) connected to the steering gear or steering shaft.

7. Connection according to claim 6, characterised in that the sleeve end of the yoke (14) of a universal joint is arranged in an adherent manner between the elastic material encasing the boss (2) and the tubular housing (12).

8. Connection according to claim 7, characterised in that the yoke consists of two symmetrical parts, which are held together by a sheet metal ring (15) surrounding them both.

## Revendications

1. Liaison entre un arbre de direction et le mécanisme de direction dans un véhicule automobile, constitué d'un moyeu (2) de l'un de ces éléments et d'un tronçon d'arbre (1) de l'autre élément, ce moyeu (2) et ce tronçon d'arbre (1) s'emboîtant l'un dans l'autre suivant une forme profilée en section transversale qui est fixe en rotation, et étant bloqués en translation axiale l'un vis-à-vis de l'autre au moyen d'au moins un élément de blocage (4) qui est constitué d'un goujon disposé transversalement à l'axe longitudinal (3) de l'arbre de direction et qui est logé dans un évidement (5) du moyeu (2) sous un angle de 90° environ vis-à-vis de l'axe du moyeu et s'emboîte, par complémentarité de formes dans la direction circonférentielle et par une zone partielle de sa surface périphérique, dans une rainure transversale (6) du tronçon d'arbre (1), caractérisée en ce que le goujon (4) est disposé dans un trou borgne (5) du moyeu (2) qui débouche du côté du centre du moyeu et dont l'axe longitudinal fait avec l'axe longitudinal (3) du moyeu un angle de 45° dont l'ouverture est tournée du côté de l'extrémité du tronçon d'arbre (1) et en ce que le goujon (4) est soumis à la sollicitation d'un ressort (7), disposé dans le trou borgne (5), en appui contre le tronçon d'arbre (1).

2. Liaison selon la revendication 1, caractérisée en ce que deux goujons (4) sont disposés chacun dans un trou borgne (5) du moyeu (2), en étant décalés de 180° l'un par rapport à l'autre.

3. Liaison selon l'une des revendications 1 et 2, caractérisée en ce que des goujons disposés d'une manière décalée l'un par rapport à l'autre dans la direction circonférentielle sont bloqués vis-à-vis d'un déplacement radial au moyen d'un collier (16) démontable.

4. Liaison selon l'une des revendications 1 à 3, caractérisée en ce qu'une surface en coin (8) est réalisée dans la zone d'extrémité du tronçon d'arbre (1) emboîté dans le moyeu (2) et en ce qu'un second goujon (9), coopérant avec cette surface en coin et en appui élastique contre le tronçon d'arbre (1), est disposé dans le moyeu suivant un axe parallèle à celui du premier goujon (4), de sorte que les forces élastiques se développent d'une manière progressive dans des sens opposés.

5. Liaison selon la revendication 4, caractérisée en ce que le goujon (9) qui exerce son action sur la surface en coin (8) est disposé d'une manière excentrée dans un évidement (10) du moyeu (2) qui a un plus grand diamètre et en ce qu'il y est enrobé dans une matière élastique (bloc élastique 11 en caoutchouc).

6. Liaison selon l'une des revendications 1 à 5, caractérisée en ce que le moyeu (2) comporte une enveloppe extérieure en matière élastique et est disposé suivant le même axe que cette dernièrre dans un boîtier tubulaire (12) relié au mécanisme de direction ou à l'arbre de direction.

7. Liaison selon la revendication 6, caractérisée en ce que l'extrémité en forme de manchon de la fourche articulée (14) d'un joint de Cardan est disposée, de manière à y être maintenue par adhérence, entre la matière élastique enveloppant le moyeu (2) et le boîtier tubulaire (12).

8. Liaison selon la revendication 7, caractérisée en ce que la fourche articulée est constituée de deux parties symétriques que maintient une virole en tôle (15) qui entoure l'une et l'autre.
